# EUROPEAN PATENT SPECIFICATION

(11) **EP 1 446 650 B1**
(45) Date of publication and mention of the grant of the patent: **22.07.2015**
(21) Application number: 02774803.7
(22) Date of filing: 06.11.2002
(51) Int. Cl.: G01N 3/24

(54) **APPARATUS AND METHOD FOR DETERMINING THE SHEARING STRENGTH OF A THERMAL INSULATION**
VORRICHTUNG UND VERFAHREN ZUR BESTIMMUNG DER SCHERSTÄRKE EINER THERMISCHEN ISOLATION
APPAREIL ET PROCEDE PERMETTANT DE DETERMINER LA RESISTANCE AU CISAILLEMENT D'UN ARTICLE D'ISOLATION THERMIQUE

(30) Priority: 14.11.2001 FI 20012213
(43) Date of publication of application: 18.08.2004
(60) Divisional application: 11151815.5
(73) Proprietor: Paroc Group Oy, 00180 Helsinki (FI)
(72) Inventor: HESELIUS, Lars, FIN-21600 Pargas (FI); WILLMAN, Tarmo, FIN-20780 Kaarina (FI); FELLMAN, Jacob, FIN-21600 Pargas (FI)
(74) Representative: LEITZINGER OY
(86) International application number: PCT/FI2002/000863
(87) International publication number: WO 2003/042665

(56) References cited:
- CH-A5- 665 482
- DE-C- 720 390
- FR-A- 1 561 457
- FR-A1- 2 328 958
- GB-A- 1 239 577
- US-A- 4 937 125
- US-A- 5 033 309
- US-A- 5 534 299
- US-A- 5 739 436

## Description

The present invention relates to an apparatus for determining the shearing strength of a structural wool. Structural wool, i.e. so-called hard wool, comprises a plurality of fiber layers of mineral wool, which make up a wool panel. Mineral wool panel can be used as such for a variety of thermal insulation applications, or it can be processed for a variety of sandwich structures, such as e.g. sandwich panels, comprising surface boards of e.g. plastic-coated sheet steel and a core layer of mineral wool therebetween. Said core layer can be made directly from a wool mat, the fibers lying in planes substantially parallel to the surface boards, or for example in such a way that a mat of mineral wool is cut for lengthwise lamellae, which are turned 90° about the longitudinal axis thereof in such a way that the fibers lie in a substantially perpendicular relationship to the surface boards of a sandwich panel. A number of lamellae are glued to each other laterally and successively for producing a wool core of a desired size, the width of a lamella cut from the wool mat defining the thickness of a core layer. Thus applied, a core section made from a wool panel functions as structural wool. In so-called lightweight sandwich elements, the core section can be made from e.g. polyurethane or polystyrene foams instead of structural wool. The inventive apparatus and method can also be used for testing a core section of such elements, as long as the core section is manufactured as a prefabricated unit which is then glued securely to the surface boards of a panel.

Structural wool is subject to several different strength requirements, one being its shearing strength. Thus far, shearing strength has been measured principally as defined in standard SFS-EN12090, which is nevertheless an inconvenient and slow process. The standardized method requires at least 30 minutes or more, as it involves waiting for the glue to dry. Hence, it is an object of the present invention to provide an apparatus for determining the shearing strength of structural wool, the apparatus being characterized as defined in claim 1.

An advantage offered by the method of determining shearing strength is that a shearing strength test can be performed quickly, as it takes no more than 2-3 minutes and, thus, can be used for continuous production control.

CH 665482 is related to testing of specimens formed by joining together separate parts by gluing, welding etc. There is no mention of structural mineral wool. US 5 739 436 is related to an apparatus and method for measuring shear strength, at an interface between geoengineering materials. It Is not related to testing of core materials for sandwich panels. FR 2 328 985 and FR 1 561 457 are related to measurement of soil and not to testing of core materials for sandwich panels. US 4 937 125 is related to sandwich panels, not to testing the shear strength of a core material. US 5 534 299 is related to process for insulating pipes. There is no mention of testing the shear strength of a core section.

A European product standard regarding sandwich structures is under development, the chosen test method being a so-called beam test. The beam test comprises cutting an element for a beam about 100-200 mm wide, having a length of about 1000-2000 mm. It is good for testing a finished product, but not for testing solely a core section and, moreover, it is tedious and hence inapplicable to direct production control.

The invention will now be described in more detail with reference to the accompanying drawings, in which:
- Figs. 1-3: show one exemplary embodiment for an apparatus of the invention in schematic views from one end, from the front, and from the other end, respectively.
- Fig. 4: shows schematically one inventive method of performing a shearing test for mineral wool.
- Fig. 5: shows schematically another inventive method of performing a shearing test for mineral wool.

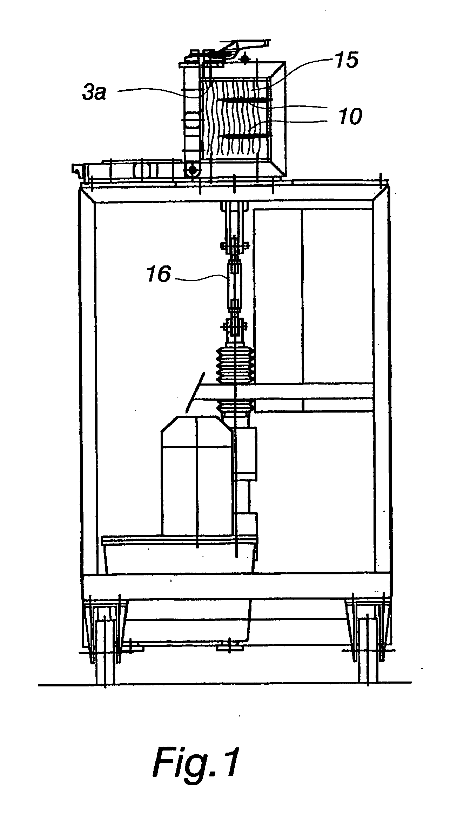

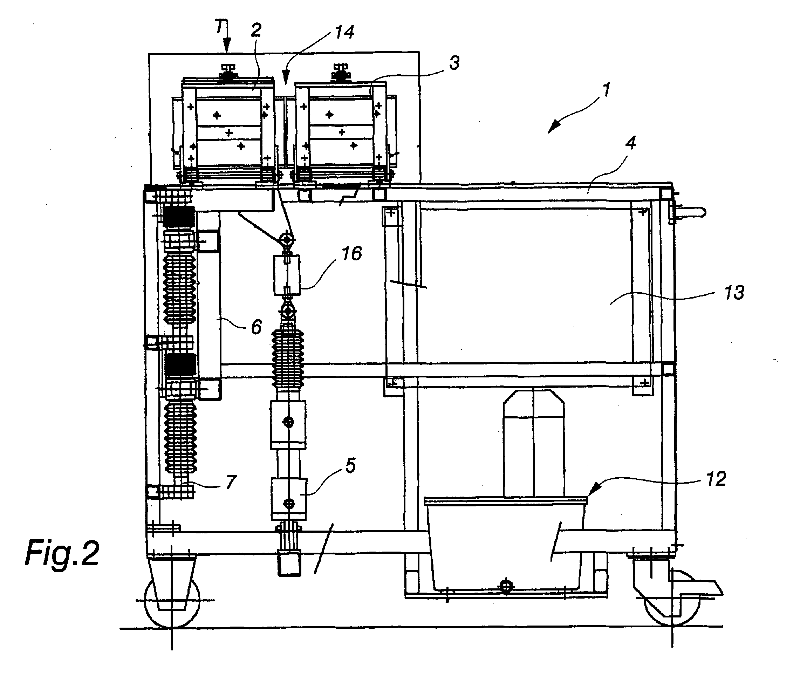

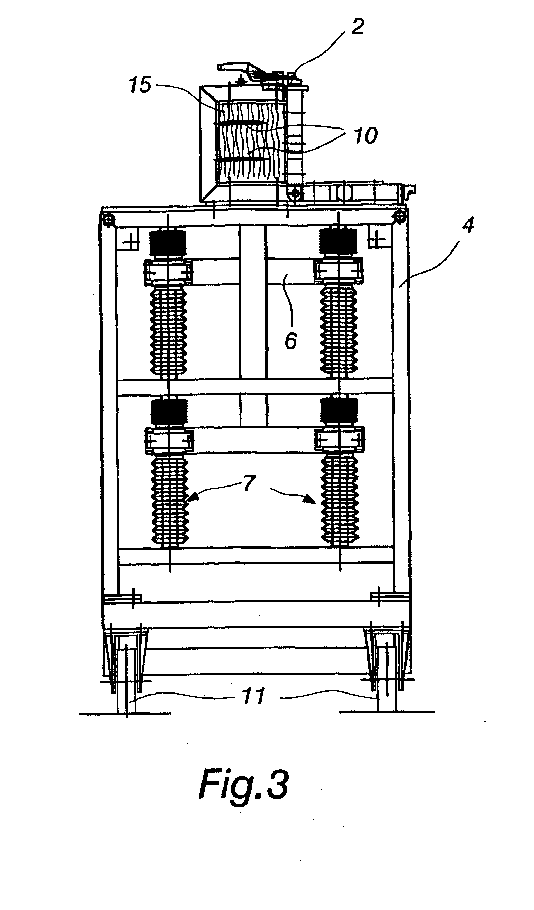

An apparatus 1 as shown in figs. 1-3 comprises a frame element 4 movable on wheels 11. On top of the frame element 4 are mounted a mobile clamping element 2 and an immobile clamping element 3, which are provided with cavities 2a and 3a, respectively, capable receiving a test specimen 15 cut off a mat of mineral wool. Immobility of the test specimen is secured by means of prongs 10 in the receiving cavity of each clamping element. The immobile clamping element 3 remains stationary on top of the frame element 4, while the mobile clamping element 2 is adapted to be movable by the action of a carriage 6 along linear guides 7 in a vertical plane. This vertical movement is accomplished by means of a hydraulic cylinder 5, which is connected to the mobile clamping element 2 by way of a power sensor 16. The apparatus 1 includes further a hydraulic unit 12 for producing necessary hydraulic energy, as well as a power distribution board 13.

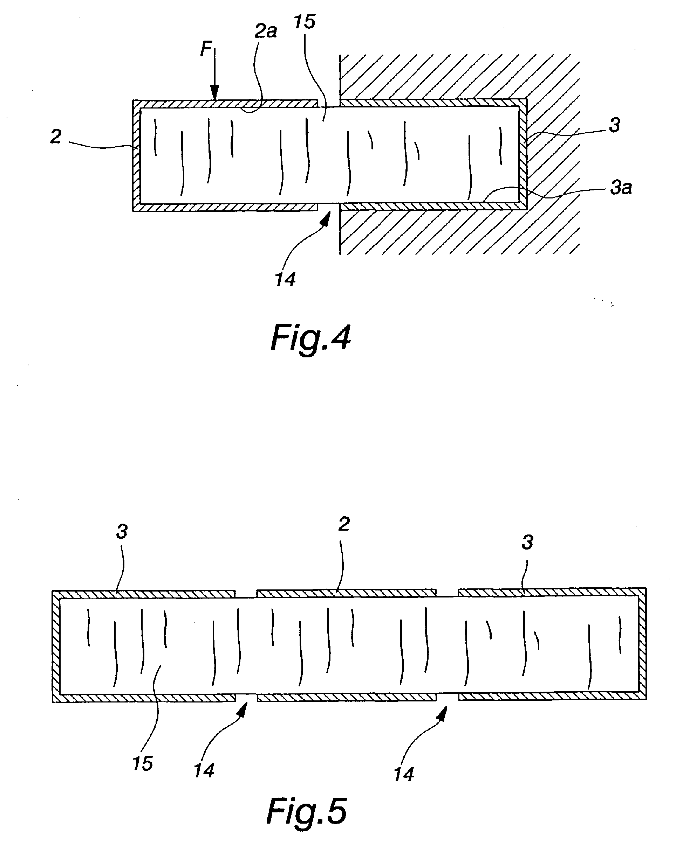

In operation, the strip-like test specimen 15 cut off a mat of mineral wool is placed, as shown in fig. 4, in the receiving cavity 2a and respectively 3a of the mobile element 2 and the immobile element 3, whereafter the mobile element 2 is subjected to an application force F by displacing the mobile element 2 at a constant traveling speed relative to the immobile element 3, whereby, as the force F increases to a sufficient magnitude, the strip 15 of mineral wool undergoes shearing at a location 14 between the mobile and immobile elements. The power sensor 16 can be used for measuring the value of force F at various times and for working out the shearing strength of a mat of mineral wool from the maximum value force. The number of test specimens made is preferably four, the average of shearing strength calculated from the breaking load thereof being applied as a shearing strength value for the presently examined mat of mineral wool. A test specimen is different from a final product as there are no surface boards, resulting in a certain distortion in the value of shearing strength as compared to a final product, but this is accommodated by using a suitable calibration factor determinable experimentally or mathematically.

Fig. 5 shows a method of the invention in another embodiment, comprising two immobile clamping elements 3, and therebetween a mobile clamping element 2 which is subjected to a force F for operating the same relative to the immobile elements. A test strip 15 is placed in the apparatus in such a way that it extends into the receiving cavities of all three clamping elements, the strip being shorn at two locations when operating the apparatus.

A major advantage gained by a method of the invention is the simplicity and speed of the method, which makes it possible to apply the method also for continuous production control. The method and apparatus are described above principally in reference to mineral wool, and particularly in reference to mineral wool used for the core section of sandwich elements, but it is also applicable to other thermal insulations, in which shearing strength is an important factor. In addition to the core section of sandwich elements, structural wool can also be used e.g. for external heat insulation by gluing wool lamellae directly to a wall surface and by topping the same with a plaster coating.

## Claims

1. An apparatus for determining the shearing strength of a thermal insulation core section of structural mineral wool for sandwich panels, the apparatus (1) comprising a mobile clamping element (2) and alongside the same at least one immobile clamping element (3), each provided with a cavity (2a, 3a) capable of receiving part of a strip-like test specimen (15) to be cut off the structural mineral wool, said apparatus being adapted to apply, normal to the lengthwise direction of the specimen, a force F to the mobile clamping element for moving the mobile clamping element (2) relative to the immobile clamping element (3) for achieving the shearing of the presently measured strip (15) at a location (14) between the mobile clamping element (2) and the immobile clamping element (3), said apparatus being further provided with means (16) for measuring the force F for its magnitude for determining the shearing strength of the core section on the basis thereof, **characterized in that** each cavity is provided with prongs (10) for immobilising the test specimen.

## Patentansprüche

1. Vorrichtung zum Bestimmen der Scherfestigkeit eines Kernabschnitts einer Wärmeisolierung aus struktureller Mineralwolle für Sandwichplatten, wobei die Vorrichtung (1) ein bewegliches Spannelement (2) und neben selbigem mindestens ein unbewegliches Spannelement (3) umfasst, die jeweils mit einem Hohlraum (2a, 3a) versehen sind, der zur Aufnahme eines Teils einer streifenförmigen Prüfprobe (15) in der Lage ist, die von der strukturellen Mineralwolle abzuschneiden ist, wobei die Vorrichtung dafür eingerichtet ist, normal zur Längsrichtung der Probe eine Kraft F auf das bewegliche Spannelement auszuüben, um das bewegliche Spannelement (2) im Verhältnis zum unbeweglichen Spannelement (3) zu bewegen, um das Abscheren des gegenwärtig gemessenen Streifens (15) an einer Stelle (14) zwischen dem beweglichen Spannelement (2) und dem unbeweglichen Spannelement (3) zu erreichen, wobei die Vorrichtung ferner mit Mitteln (16) zum Messen der Größe der Kraft F versehen ist, um die Scherfestigkeit des Kernabschnitts auf der Basis derselben zu bestimmen, **dadurch gekennzeichnet, dass** jeder Hohlraum mit Zacken (10) zum Fixieren der Prüfprobe versehen ist.

## Revendications

1. Appareil pour la détermination de la force de cisaillement d'une section centrale d'isolation thermique de laine minérale structurelle destinée à des panneaux feuilletés, cet appareil (1) comprenant un élément de serrage mobile (2) et, le long de celui-ci, au moins un élément de serrage fixe (3), chacun pourvu d'une cavité (2a, 3a) apte à recevoir une partie d'un spécimen de test de type bande (15) à découper dans la laine minérale structurelle, chaque appareil étant apte à appliquer, à la normale du sens de la longueur du spécimen, une force F à l'élément de serrage mobile pour déplacer l'élément de serrage mobile (2) par rapport à l'élément de serrage fixe (3) pour réaliser le cisaillement de la bande en train d'être mesurée (15) à un emplacement (14) entre l'élément de serrage mobile (2) et l'élément de serrage immobile (3), ledit appareil étant en outre pourvu de moyens (16) pour mesurer la force F au niveau de sa magnitude afin de déterminer la force de cisaillement de la section centrale d'isolation sur la base de celle-ci, **caractérisé en ce que** chaque cavité est équipée de dents (10) pour immobiliser le spécimen de test.
